# EUROPÄISCHE PATENTSCHRIFT

(11) **EP 0 474 976 B1**
(45) Veröffentlichungstag und Bekanntmachung des Hinweises auf die Patenterteilung: **16.08.1995**
(21) Anmeldenummer: 91109156.9
(22) Anmeldetag: 05.06.1991
(51) Int. Cl.: A61C 13/14, A61C 19/00

(54) **Polyermerisationseinrichtung**
Device for polymerisation
Dispositif de polymérisation

(30) Priorität: 08.09.1990 DE 4028566
(43) Veröffentlichungstag der Anmeldung: 18.03.1992
(73) Patentinhaber: HERAEUS KULZER GMBH, 63450 Hanau (DE)
(72) Erfinder: Oppawsky, Steffen, W-6380 Bad Homburg (DE)
(74) Vertreter: Kühn, Hans-Christian

(56) Entgegenhaltungen:
- EP-A- 0 098 602
- EP-A- 0 283 557
- DE-C- 3 411 996

## Beschreibung

Die vorliegende Erfindung betrifft eine Polymerisationseinrichtung mit einem über wenigstens eine schwenkbare oder verschiebbare Wand zugänglichen Bestrahlungsraum einer Bestrahlungskammer zur Behandlung von Dental-Kunststoff-Teilen, mit einem Lichtleiter und mit einer Strahlungsquellen-Einheit, wobei der Lichtleiter die Strahlung der Strahlungsquelle in den Bestrahlungsraum der Bestrahlungskammer einkoppelt und eine lösbare Verbindung zwischen der Bestrahlungskammer und der Strahlungsquellen-Einheit bildet.

Eine derartige Polymerisationseinrichtung ist aus dem Prospekt "Translux, Hochleistungshandlichtgeräte für Praxis und Labor" (Nr. 151188/D 185 sk deutsch) bekannt. Bei einer der gezeigten Strahlungsquellen-Einheiten handelt es sich um ein Tischgerät, das einen Anschluß für einen Lichtleiter besitzt. Der daran anschließbare Lichtleiter ist lang, flexibel und besitzt ein Griffstück, an dem der Lichtleiter vom Zahnarzt zur Behandlung im Munde des Patienten geführt wird. Am vorderen Ende des Griffstückes ist ein gekrümmtes Lichtaustrittsende angebracht.

An den Anschluß für den Lichtleiter kann auch eine Bestrahlungskammer, wie sie aus der deutschen Patentschrift 37 08 204 bekannt ist, angesteckt werden. Dabei liegt die Bestrahlungskammer direkt am Tischgerät an und ist auf dem Tisch abgestützt. Diese aus dem Tischgerät und der an dieses angeschlossenen Bestrahlungskammer bestehende Polymerisationseinrichtung ist an das Vorhandensein eines Tischgerätes als Strahlungsquellen-Einheit gebunden.

Neben diesen Tischgeräten sind Handpolymerisationsgeräte, deren Gehäuse neben dem Griffstück auch Bedien- und Anzeigeelemente sowie die Lichtquelle und den Lüfter beinhalten und stationäre Polymerisationsgeräte, die eine Bestrahlungskammer beinhalten und überwiegend in Dentallabors Anwendung finden, in Gebrauch. Vielfach sind in Zahnarztpraxen jedoch nur Handpolymerisationsgeräte zur Behandlung von Dental-Kunststoff-Teilen vorhanden, die ausschließlich für eine Anwendung im Mund des Patienten eingesetzt werden.

Der vorliegenden Erfindung liegt nun die Aufgabe zugrunde, eine Polymerisationseinrichtung zu schaffen, die es erlaubt, mittels eines Handpolymerisationsgerätes eine Bestrahlungskammer zum Aushärten von Dental-Kunststoff-Teilen zu betreiben, wobei die Umrüstung von einem Handpolymerisationsgerät auf eine stationäre Polymerisationseinrichtung auf einfache Art möglich sein soll.

Gelöst wird diese Aufgabe dadurch, daß die Strahlungsquellen-Einheit ein Handpolymerisationsgerät ist, das mit seinem Gehäuseteil an einem an einer Trägerplatte eines Trägergestells angeordneten ersten Träger gehaltert ist, daß in einem zweiten Träger der Trägerplatte eine Außenummantelung des Lichtleiters geführt ist, und daß sich die Bestrahlungskammer an dem zweiten Träger und/oder an der Trägerplatte des Trägergestelles abstützt, wobei die Bestrahlungskammer und das Handpolymerisationsgerät mit Hilfe des Trägergestells in ihrer Lage zueinander fixiert werden.

Durch die mittels des Trägergestelles realisierte Verbindung einer Bestrahlungskammer mit einem Handpolymerisationsgerät ist es möglich, ein Handpolymerisationsgerät auch stationär in Verbindung mit einer Bestrahlungskammer einzusetzen. Dazu geeignete Handpolymerisationsgeräte sind zum Beispiel aus der DE-A-26 27 249, der DE-A-22 01 308 oder der DE-C-34 11 996, bekannt. Die Handpolymerisationsgeräte beinhalten eine Strahlungsquelle, einen Lüfter sowie Bedien- und Anzeigeelemente. Am Vorderteil des Handpolymerisationsgerätes ist eine Steckhülse angebracht, mit deren Hilfe verschiedene Lichtleiter am Handpolymerisationsgerät befestigt werden können. Das Gehäuseteil eines solchen Handpolymerisationsgerätes wird in einer Ausnehmung des ersten Trägers fixiert. Die Außenummantelung des Lichtleiters wird durch eine Öffnung im zweiten Träger geführt, beispielsweise durch Formschlüssigkeit zu dieser Öffnung sicher und fest gehalten und ist in der Bestrahlungskammer befestigt. Die Bestrahlungskammer ist an dem Trägergestell abgestützt.

Mit Hilfe der erfindungsgemäßen Polymerisatlonseinrichtung ist eine schnelle und unkomplizierte Umrüstung und eine stabile Kopplung eines Handpolymerisationsgerätes an eine Bestrahlungskammer möglich, so daß es auch in solchen Zahnarztpraxen, in denen nur ein Handpolymerisationsgerät vorhanden ist, möglich wird, Dental-Kunststoff-Teile stationär zu bestrahlen, auszuhärten und zu vergüten.

Eine besonders zweckmäßige Ausgestaltung des Trägergestelles sieht vor, daß der erste Träger ein plattenförmiges Teil ist, das eine Öffnung zur Aufnahme des Handpolymerisationsgerätes aufweist. In diese Öffnung kann das Gehäuseteil des Handpolymerisationsgerätes hineingesteckt und durch Formschlüssigkeit zu der Öffnung sicher und fest gehaltert werden.

In einer einfachen Ausgestaltung des Trägergestelles sind die Träger senkrecht auf der Trägerplatte befestigt.

Das Trägergestell kann aus Kunststoff, z. B. Acrylglas, oder aus Aluminiumblech bestehen.

Um die Umrüstung von einem Handpolymerisationsgerät zu einem stationären Gerät zu vereinfachen, ist der erste Träger von der Öffnung zur Außenseite geschlitzt, dadurch wird eine genaue Justierung beim Aufstecken des Handpolymerisationsgerätes auf den Lichtleiter der Bestrahlungskammer gewährleistet. Weiterhin kann dieser Schlitz den Vorteil bieten, daß nicht das gesamte Handpolymerisationsgerät aus der Öffnung herausgezogen werden muß, sondern es genügt dann, das Gehäuse herauszuziehen und den Lichtleiter durch den Schlitz nach außen zu führen. Das führt zu einer Vereinfachung der Montage bzw. Demontage des Handpolymerisationsgerätes mit der Bestrahlungskammer.

Im Hinblick auf ein leichtes Verbinden bzw. Lösen kann die Außenummantelung des Lichtleiters mit der Bestrahlungskammer und/oder mit dem Handpolymerisationsgerät einrastend verbunden sein. Dadurch ist eine Fixierung der relativen Lage des Handpolymerisationsgerätes zur Bestrahlungskammer gewährleistet und gesichert, daß an dem zu behandelnden Dental-Kunststoff-Teil konstante Strahlungsverhältnisse herrschen.

Vorteilhafterweise liegt die Bestrahlungskammer an der dem Handpolymerisationsgerät abgewandten Seite des zweiten Trägers an und eine Außenummantelung des Lichtleiters klemmt mit ihrer Stirnseite im eingerasteten Zustand des Lichtleiters den zweiten Träger zwischen sich und der Bestrahlungskammer fest. Dadurch ist eine stabile Verbindung zwischen der Bestrahlungskammer, dem Trägergestell und dem Handpolymerisationsgerät gewährleistet, so daß die gesamte Polymerisationseinrichtung in sich stabil ist. In einer weiteren vorteilhaften Anordnung wird die Bestrahlungskammer mit dem Lichtleiter dadurch fixiert, daß sie von der dem Handpolymerisationsgerät abgewandten Seite des zweiten Trägers her an diesem anliegt.

Zusätzlich kann die Bestrahlungskammer mit außenummantelten Lichtleiter an der Trägerplatte des Trägergestelles befestigt sein. Damit wird Insbesondere ein Verdrehen der Bestrahlungskammer zur optische Achse des Lichtstrahles verhindert.

Eine einfache Klemmung erfolgt dadurch, daß die Bestrahlungskammer unten seitlich zwei Stege aufweist, die die Außenkontur der Trägerplatte teilweise einschließen.

Um die Stabilität der Polymerisationseinrichtung weiter zu erhöhen, ist es zweckmäßig, das Handpolymerisationsgerät in dem ersten Träger drehfest zu haltern. Dadurch wird verhindert, daß sich die Lage der Bestandteile der Polymerisationseinrichtung selbsttätig verändert und dadurch die Bestrahlungsverhältnisse in der Bestrahlungskammer geändert werden oder durch Verdrehung des Handpolymerisationsgerätes im Trägergestell hervorgerufene Erschütterungen den Polymerisationsvorgang beeinträchtigen.

Weiterhin wird durch die drehfeste Anordnung die Bedienung der Polymerisationseinrichtung vereinfacht, da sich dann zum Beispiel am Handpolymerisationsgerät befindliche Bedien- oder Anzeigeelemente stets an der gleichen Stelle befinden und nicht erst "gesucht" werden müssen.

In dem Fall, in dem das Handpolymerisationsgerät an seinem Gehäuse einen Vorsprung aufweist, der beispielsweise zur Aufnahme eines Anzeigeelementes oder einer Kabelzuführung dient, kann die drehfeste Anordnung dadurch erzielt werden, daß dieser Vorsprung in einen vorhandenen Schlitz des ersten Trägers eingreift, ohne daß dazu gesonderte Bauteile erforderlich sind.

Um die Bedienung möglichst einfach zu gestalten ist es zweckmäßig, das Handpolymerisationsgerät in dem Trägergestell derartig festzulegen, daß ein am Gehäuse befindlicher Aktivierungsschalter sich auf einer der Trägerplatte abgewandten Seite befindet. Zum einen ist dieser Schalter dadurch leicht zugänglich und zum anderen befindet er sich immer an der gleichen Stelle, so daß er von dem das Gerät bedienenden Zahnarzt stets schnell aufgefunden werden kann.

Um eine möglichst einfache Konstruktion des Trägergestelles zu erhalten, ist die Trägerplatte gleichzeitig als Bodenplatte des Trägergestelles ausgebildet.

Um den konstruktiven Aufbau einfach zu gestalten, ist die Polymerisationseinrichtung so gestaltet, daß die Achse des Lichtleiters in etwa parallel zu der Trägerplatte verläuft.

Die Einrichtung kann beispielsweise mit Hilfe von in der Trägerplatte befindlichen Löchern an einer Wand befestigt werden oder sie kann als Standgerät benutzt werden, wobei der Lichtleiter mit seiner Achse horizontal ausgerichtet ist.

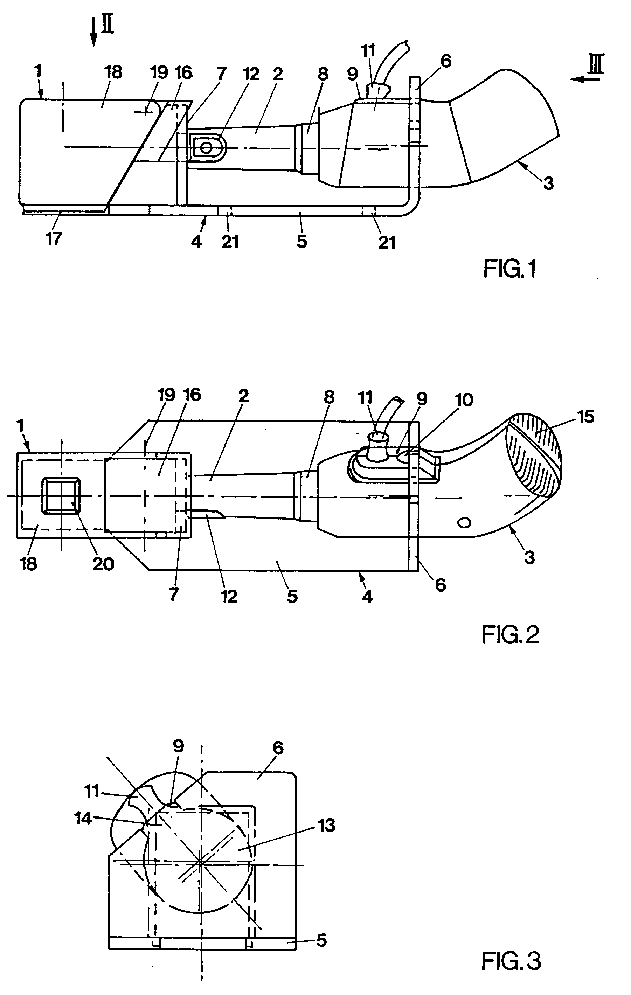

Nachfolgend wird ein Ausführungsbeispiel der Erfindung anhand der Zeichnung näher erläutert:
In der Zeichnung zeigt
- Figur 1: eine Polymerisationseinrichtung in einer Seitenansicht,
- Figur 2: die Polymerisationseinrichtung in der Draufsicht, in Richtung des Sichtpfeiles II in Figur 1 und
- Figur 3: die Polymerisationseinrichtung nach Figur 1 in einer Seitenansicht in Richtung des Sichtpfeiles III in Figur 1.

Die Polymerisationseinrichtung zur Behandlung von Dental-Kunststoff-Teilen weist eine Bestrahlungskammer 1 mit einem Lichtleiter 2, ein als Strahlungsquellen-Einheit dienendes Handpolymerisationsgerät 3 und ein Trägergestell 4 mit dessen Hilfe die anderen Bestandteile der Polymerisationseinrichtung in ihrer Lage zueinander fixiert werden, auf.

Das Trägergestell 4 weist eine Trägerplatte 5, einen ersten Träger 6 und einen zweiten Träger 7, die beide etwa senkrecht auf der Trägerplatte 5 des Trägergestelles 4 stehen, auf.

Das Handpolymerisationsgerät 3 besitzt ein Gehäuse, in dessen vorderem Teil die Lichtquelle angeordnet und in dessen hinterem Teil der Lüfter untergebracht ist. Dabei ist der hintere Teil des Gehäuses etwas abgewinkelt, um den durch den Lüfter verursachten Luftstrom nicht auf den Arm des das Handpolymerisationsgerät handhabenden Arztes zu lenken. An der Vorderseite des Gehäuses ist eine Steck-Hülse 8 angebracht, die der Aufnahme des Lichtleiters 2 mit Außenummantelung dient. Seitlich am vorderen Teil des Gehäuses angebracht sind an einem Vorsprung 9 eine Schraube 10 für die Gehäuseverschraubung und eine trompetenförmige Kabelführung 11 als Biegeschutz. An der Steck-Hülse 8 des Handpolymerisationsgerätes 3 befindet sich ein Aktivierungsschalter 12 in einer solchen Lage, daß er, wenn die Steck-Hülse 8 mit dem Zeigefinger gehalten wird, vom Daumen betätigt werden kann.

Das Handpolymerisationsgerät 3 wird mit seinem Steck-Hülsenteil durch eine Öffnung 13 des ersten Trägers 6 auf die Außenummantelung des Lichtleiters 2 geschoben. Die Öffnung 13 entspricht dem Querschnitt des vorderen Teiles des Gehäuses. Der erste Träger 6 weist außerdem einen zur Außenseite des ersten Trägers 6 hindurchgehenden Schlitz 14 auf. In diesen Schlitz 14 ragt der am Gehäuse befindliche Vorsprung 9 hinein, so daß das Handpolymerisationsgerät 3 drehfest gelagert ist. Dabei ist der Schlitz 14 in einem Winkel von etwa 45° Grad zur Trägerplatte 5 so angebracht, daß die Luftaustrittsöffnung 15 des Handpolymerisationsgerätes 3 vom Körper des die Polymerisationseinrichtung bedienenden Arztes wegweist und sich der Aktivierungsschalter 12 auf einer der Trägerplatte 5 abgewandten Seite befindet. Dabei ragt der in der Steck-Hülse 8 befindliche Lichtleiter 2 mit Außenummantelung durch eine Öffnung des zweiten Trägers 7 hindurch.

Die Bestrahlungskammer 1, die an einer Seite eine Öffnung zur Aufnahme des Lichtleiters 2 mit Außenummantelung aufweist, wird mit dieser Öffnung auf das Ende des Lichtleiters 2 mit Außenummantelung aufgedrückt, wobei die Außenummantelung an einem Ende eine umlaufende Wulst aufweist, die in der Öffnung der Bestrahlungskammer 1 einrastet. Dabei liegt ein festes Gehäuseteil 16 der Bestrahlungskammer 1 auf dem zweiten Träger 7 auf. Der Boden der Bestrahlungskammer 1 weist unten zwei seitliche Stege 17 auf, die die Außenkontur der Trägerplatte 5 teilweise umschließen.

Um die Bestückung der Bestrahlungskammer 1 zu ermöglichen, ist das Gehäuse-Oberteil 18 der Bestrahlungskammer 1 an einer Schwenkachse 19 gelagert. Die Schwenkachse 19 befindet sich nahe der auf dem zweiten Träger 7 aufliegenden Stelle des festen Gehäuseteiles 16. In der Oberseite des Gehäuse-Oberteiles 18 ist ein Fenster 20 eingelassen, das der Beobachtung des Polymerisationsvorganges dient.

Die Öffnungen in dem ersten Träger 6 und dem zweiten Träger 7 sind so angebracht, daß die Achse des Lichtleiters 2 parallel zur Trägerplatte 5 verläuft.

Das gesamte Trägergestell 4 ist aus Acrylglas gefertigt.

In der Trägerplatte 5 befinden sich Löcher 21, mit deren Hilfe die Polymerisationseinrichtung auf einem Tisch oder an einer Wand befestigt werden kann.

## Patentansprüche

1. Polymerisationseinrichtung mit einem über wenigstens eine schwenkbare oder verschiebbare Wand zugänglichen Bestrahlungsraum einer Bestrahlungskammer zur Behandlung von Dental-Kunststoff-Teilen, mit einem Lichtleiter und mit einer Strahlungsquellen-Einheit, wobei der Lichtleiter die Strahlung der Strahlungsquelle in den Bestrahlungsraum der Bestrahlungskammer einkoppelt und eine lösbare Verbindung zwischen der Bestrahlungskammer und der Strahlungsquellen-Einheit bildet, dadurch gekennzeichnet, daß die Strahlungsquellen-Einheit ein Handpolymerisationsgerät (3) ist, das mit seinem Gehäuseteil an einem an einer Trägerplatte (5) eines Trägergestelles (4) angeordneten ersten Träger (6) gehaltert ist, daß in einem zweiten Träger (7) der Trägerplatte (5) der Lichtleiter (2) geführt ist und daß sich die Bestrahlungskammer (1) an dem zweiten Träger (7) und/oder an der Trägerplatte (5) des Trägergestelles (4) abstützt, wobei die Bestrahlungskammer (1) und das Handpolymerisationsgerät (3) mit Hilfe des Trägergestells (4) in ihrer Lage zueinander fixiert werden.

2. Polymerisationseinrichtung nach Anspruch 1, dadurch gekennzeichnet, daß der erste Träger (6) ein plattenförmiges Teil ist, das eine Öffnung (13) zur Aufnahme des Gehäuseteiles des Handpolymerisationsgerätes (3) aufweist.

3. Polymerisationseinrichtung nach Anspruch 2, dadurch gekennzeichnet, daß der erste Träger (6) einen von der Öffnung (13) zur Außenseite hin durchgehenden Schlitz (14) aufweist.

4. Polymerisationseinrichtung nach einem der Ansprüche 1 bis 3, dadurch gekennzeichnet, daß der Lichtleiter (2) eine Außenummantelung aufweist, die mit der Bestrahlungskammer (1) und/oder dem Handpolymerisationsgerät (3) verbunden ist.

5. Polymerisationseinrichtung nach Anspruch 4, dadurch gekennzeichnet, daß der zweite Träger (7) die Außenummantelung des Lichtleiters (2) hält.

6. Polymerisationseinrichtung nach einem der Ansprüche 1 bis 5, dadurch gekennzeichnet, daß die Bestrahlungskammer (1) an ihrer Unterseite Stege (17) aufweist, die die Außenkontur der Trägerplatte (5) teilweise umschließen.

7. Polymerisationseinrichtung nach einem der Ansprüche 1 bis 6, dadurch gekennzeichnet, daß das Handpolymerisationsgerät (3) in dem ersten Träger (6) drehfest gehaltert ist.

8. Polymerisationseinrichtung nach Anspruch 3 und 7, dadurch gekennzeichnet, daß das Handpolymerisationsgerät (3) einen Vorsprung (9) aufweist, der in den Schlitz (14) eingreift.

9. Polymerisationseinrichtung nach einem der Ansprüche 1 bis 8, dadurch gekennzeichnet, daß das Handpolymerisationsgerät (3) einen Aktivierungsschalter (12) aufweist, wobei das Handpolymerisationsgerät (3) derart in dem Trägergestell (4) festgelegt ist, daß sich der Aktivierungsschalter (12) auf einer der Trägerplatte (5) abgewandten Seite befindet.

10. Polymerisationseinrichtung nach einem der Ansprüche 1 bis 9, dadurch gekennzeichnet, daß die Trägerplatte (5) die Bodenplatte des Trägergestells (4) bildet.

11. Polymerisationseinrichtung nach einem der Ansprüche 1 bis 10, dadurch gekennzeichnet, daß die Achse des Lichtleiters (2) parallel zu der Trägerplatte (5) verläuft.

12. Polymerisationseinrichtung nach Anspruch 11, dadurch gekennzeichnet, daß der Lichtleiter (2) mit seiner Achse horizontal ausgerichtet verläuft.

## Claims

1. A polymerisation arrangement with an irradiation space of an irradiation chamber, accessible via at least one pivotable or displaceable wall, for the treatment of dental plastic pieces, with a photoconductor and with a radiation source unit, in which the photoconductor couples the radiation of the radiation source into the irradiation space of the irradiation chamber and forms a detachable connection between the irradiation chamber and the radiation source unit, characterised in that the radiation source unit is a manual polymerisation apparatus (3), which is held by its housing part on a first carrier (6) arranged on a carrier plate (5) of a carrier frame (4), that the photoconductor (2) is guided in a second carrier (7) of the carrier plate (5) and that the irradiation chamber (1) rests against the second carrier (7) and/or against the carrier plate (5) of the carrier frame (4), in which the irradiation chamber (1) and the manual polymerisation apparatus (3) are fixed in their position with respect to each other by means of the carrier frame (4).

2. A polymerisation arrangement according to Claim 1, characterised in that the first carrier (6) is a plate-shaped part, which has an opening (13) to receive the housing part of the manual polymerisation apparatus (3).

3. A polymerisation arrangement according to Claim 2, characterised in that the first carrier (6) has a slit (14) passing through from the opening (13) towards the exterior.

4. A polymerisation arrangement according to one of Claims 1 to 3, characterised in that the photoconductor (2) has an exterior sheathing which is connected with the irradiation chamber (1) and/or with the manual polymerisation apparatus (3).

5. A polymerisation arrangement according to Claim 4, characterised in that the second carrier (7) holds the exterior sheathing of the photoconductor (2).

6. A polymerisation arrangement according to one of Claims 1 to 5, characterised in that the irradiation chamber (1) has on its underside cross-pieces (17) which partially surround the outer contour of the carrier plate (5).

7. A polymerisation arrangement according to one of Claims 1 to 6, characterised in that the manual polymerisation unit (3) is held in the first carrier (6) so as to be secure with respect to torsion.

8. A polymerisation arrangement according to Claim 3 and 7, characterised in that the manual polymerisation apparatus (3) has a projection (9) which engages in the slit (14).

9. A polymerisation arrangement according to one of Claims 1 to 8, characterised in that the manual polymerisation apparatus (3) has an activation switch, in which the manual polymerisation apparatus (3) is fixed in the carrier frame (4) such that the activation switch (12) is situated on a side facing away from the carrier plate (5).

10. A polymerisation arrangement according to one of Claims 1 to 9, characterised in that the carrier plate (5) forms the base plate of the carrier frame (4).

11. A polymerisation arrangement according to one of Claims 1 to 10, characterised in that the axis of the photoconductor (2) runs parallel to the carrier plate (5).

12. A polymerisation arrangement according to Claim 11, characterised in that the photoconductor (2) runs with its axis aligned horizontally.

## Revendications

1. Agencement de polymérisation comportant un espace d'irradiation d'une chambre d'irradiation, accessible par l'intermédiaire d'au moins une paroi susceptible d'être pivotée ou susceptible d'être translatée, pour le traitement de parties en matière synthétique dentaires, comportant un conducteur de lumière et comportant une unité de source de rayonnement, le conducteur de lumière couplant intérieurement le rayonnement de la source de rayonnement dans l'espace d'irradiation de la chambre d'irradiation et formant une liaison amovible entre la chambre d'irradiation et l'unité de source de rayonnement, caractérisé en ce que l'unité de source de rayonnement est un appareil de polymérisation manuel (3), qui est maintenu, avec sa partie de boîtier, à un premier support (6) agencé à une plaque de support (5) d'un bâti de support (4), que le conducteur de lumière (2) est conduit dans une deuxième support (7) de la plaque de support (5), et en ce que la chambre d'irradiation (1) prend appui au deuxième support (7) et/ou à la plaque de support (5) du bâti de support (4), la chambre d'irradiation (1) et l'appareil de polymérisation manuel (3) étant fixés, dans leur situation l'un par rapport à l'autre, à l'aide du bâti de support (4).

2. Agencement de polymérisation selon la revendication 1, caractérisé en ce que le premier support (6) est une partie en forme de plaque, qui présente une ouverture (13) pour l'accueil de la partie de boîtier de l'appareil de polymérisation manuel (3).

3. Agencement de polymérisation selon la revendication 2, caractérisé en ce que le premier support (6) présente une fente (14) allant en traversant de l'ouverture (13) au côté extérieur.

4. Agencement de polymérisation selon une des revendications 1 à 3, caractérisé en ce que le conducteur de lumière (2) présente une enveloppe, qui est reliée avec la chambre d'irradiation (1) et/ou l'appareil de polymérisation manuel (3).

5. Agencement de polymérisation selon la revendication 4, caractérisé en ce que le deuxième support (7) maintient l'enveloppe du conducteur de lumière (2).

6. Agencement de polymérisation selon une des revendications 1 à 5, caractérisé en ce que la chambre d'irradiation (1) présente des barrettes (17) à son côté inférieur, qui enferment partiellement le contour extérieur de la plaque de support (5).

7. Agencement de polymérisation selon une des revendications 1 à 6, caractérisé en ce que l'appareil de polymérisation manuel (3) est maintenu fixe en rotation dans le premier support (6).

8. Agencement de polymérisation selon la revendication 3 et la revendication 7, caractérisé en ce que l'appareil de polymérisation manuel (3) présente une partie en saillie (9), qui vient en prise dans la fente (14).

9. Agencement de polymérisation selon une des revendications 1 à 8, caractérisé en ce que l'appareil de polymérisation manuel (3) présente un interrupteur d'activation (12), l'appareil de polymérisation manuel (3) étant disposé fixe de telle sorte dans le bâti de support (4), que l'interrupteur d'activation (12) se trouve sur un côté éloigné de la plaque de support (5).

10. Agencement de polymérisation selon une des revendications 1 à 9, caractérisé en ce que la plaque de support (5) forme la plaque de fond du bâti de support (4).

11. Agencement de polymérisation selon une des revendications 1 à 10, caractérisé en ce que l'axe du conducteur de lumière (2) s'étend parallèle à la plaque de support (5).

12. Agencement de polymérisation selon la revendication 11, caractérisé en ce que le conducteur de lumière (2) s'étend avec son axe orienté horizontal.
